(19) Europäisches Patentamt
European Patent Office
Office européen des brevets

(11) Publication number: 0 033 947
B2

(12) NEW EUROPEAN PATENT SPECIFICATION

(45) Date of publication of the new patent specification: 14.01.87

(51) Int. Cl.⁴: C 09 K 19/02, G 02 F 1/137

(21) Application number: 81100785.5

(22) Date of filling: 04.02.81

# (54) Liquid crystal display element.

(30) Priority: 12.02.80 JP 14759/80
27.02.80 JP 22676/80

(43) Date of publication of application: 19.08.81 Bulletin 81/33

(45) Publication of the grant of the patent: 21.09.83 Bulletin 83/38

(45) Mention of the opposition decision: 14.01.87 Bulletin 87/3

(84) Designated Contracting States: CH DE FR GB LI NL

(73) Proprietor: Kabushiki Kaisha Toshiba, 72, Horikawa- cho Saiwai- ku, Kawasaki- shi Kanagawa- ken 210 (JP)

(72) Inventor: Matsumoto, Shoichi, 205 Sasanodai, Asahi- ku Yokohama- shi (JP)
Inventor: Mizunoya, Kiyoshi, 891 Kamishirane- cho, Asahi- ku Yokohama- shi (JP)
Inventor: Tomii, Hitoshi, 656 Kashimada, Saiwai- ku Kawasaki- shi (JP)
Inventor: Kawamoto, Masahiro, 97 Nagaodai- cho, Totsuka- ku Yokohama- shi (JP)
Inventor: Wada, Yuusuke, 1-2- 305, Hamamidaira, Chigasaki- shi Kanagawa- ken (JP)

(74) Representative: Henkel, Feiler, Hänzel & Partner, Möhlstrasse 37, D-8000 München 80 (DE)

(56) References cited:
DE-A-2 009 528
DE-A-2 024 269
DE-A-2 139 628
DE-A-2 300 055
DE-A-2 316 864
DE-A-2 538 865
DE-A-2 645 518
DE-A-2 655 890
DE-A-2 702 598
DE-A-2 831 469
DE-B-2 429 093
DE-B-2 429 093
DE-B-2 636 684
DE-B-2 701 591
FR-A-2 316 310
FR-A-2 328 030
FR-A-2 337 188
JP-A-49 086 279
JP-A-49 130 375
JP-A-51 068 481
JP-A-52 113 386

(56) References cited: (continuation)
JP-A-52 147 581
JP-A-53 032 049
JP-A-54 148 184
NL-A-7 312 541
US-A-3 932 298
US-A-4 020 002
US-A-4 031 028
US-A-4 147 656

APPLIED PHYS. LETTERS, vol. 21, no. 4, August 15, 1972, New York, USA A.I. BAISE et al. "Effect of charge-transfer acceptors on dynamic scattering in a nematic liquid crystal" pages 142,143
Ullmann, Band 11 (1976), Seite 662
Präparateblatt Merck "Neumatische Phase 887
Licristal (1977) Katalog Merck Reagenzien, Diagnostica, Chemikalien (1978), S. 245

EP 0 033 947 B2

LIBER, STOCKHOLM 1987

**Description**

The present invention relates to a display element which utilizes the dynamic scattering effect of liquid crystal.

A liquid crystal material is conventionally known which scatters light when a voltage is applied thereto, said liquid crystal material being prepared by adding an electrolyte for raising the electrical conductivity to a liquid crystal having a negative dielectric anisotropy. This is known as the dynamic scattering effect of liquid crystal, and is utilized for display. For example, a liquid crystal together with an electrolyte is interposed and sealed between two electrodes, at least one of which is transparent. When a predetermined voltage is applied across these electrodes, dynamic scattering is caused in the liquid crystal molecules, thereby providing a display. When an attempt is made to utilize such a display based on dynamic scattering not only for display of numerals and letters but also for picture image display, it is insufficient to provide only display and non-display modes by application or non-application of a voltage. It becomes necessary to perform a display of intermediate modes (gray shades) by control of dynamic scattering by voltage. It also becomes necessary to obtain a high response when the display is intended as a moving picture image display such as a TV display. The liquid crystal material to be used for the liquid crystal display element for picture image display must have a high contrast of tones to display, allow easy display of intermediate modes, have a high response, and the like. To our knowledge, a liquid crystal material which satisfies all these requirements is not conventionally known.

It is, therefore, the primary object of the present invention to provide a liquid crystal display element according to which the contrast is high, the display of intermediate modes is easy, and the response is high.

A liquid crystal display element which utilizes dynamic scattering (DS) of liquid crystal according to the present invention includes, with the exception of a liquid crystal material consisting of compounds of the following formulae:

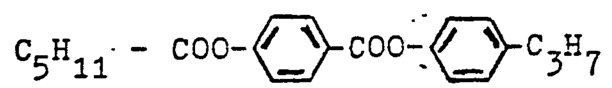

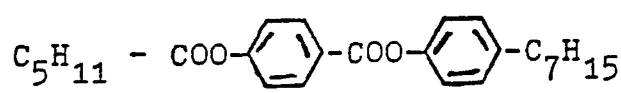

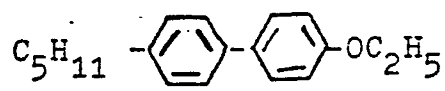

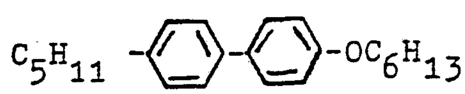

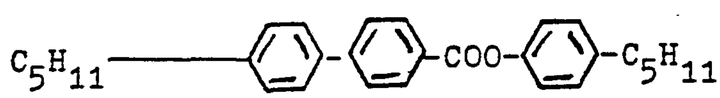

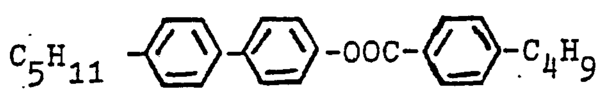

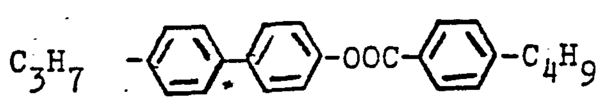

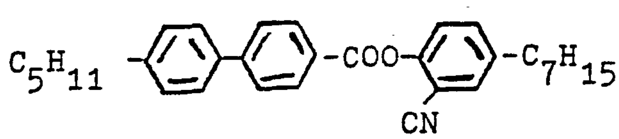

as its liquid crystal material, a mixture of a first component selected from the group consisting of liquid crystals having relatively small birefringence of up to 0,14 and mixtures thereof, and a second component selected from the group consisting of liquid crystals having relatively great birefringence of 0,2-0,3 and mixtures thereof. This liquid crystal material has a birefringence of 0.14 to 0.21 when measured with light of 589 nm wavelength at 20° C.

When the mixed liquid crystals of the types described above are used as the liquid crystal material according to the present invention, display elements can be obtained which provide high contrast, excellent gradation (gray scale), and a high response capable of providing a moving picture image display such as a TV

display, and which provide long DC operation life. Thus, a liquid crystal display element of the present invention is suitable for picture image display such as moving picture image display.

The birefringence (Δn) mentioned in the present specification and claims is defined as that measured with light of 589 nm wavelength at 20°C.

The present invention will now be described in more detail with reference to the accompanying drawing which is a graph showing the voltage transmittance characteristics of liquid crystal material layers according to one embodiment of the present invention together with those of comparative examples.

As has been already described, a liquid crystal material used for the display element of the present invention is a mixture of a first component comprising at least one liquid crystal having relatively small birefringence and a second component comprising at least one liquid crystal having relatively great birefringence.

The liquid crystals having relatively small birefringence comprising the first component include:

Cyclohexanecarboxylic acid ester type liquid crystals, particularly, of the general formula:

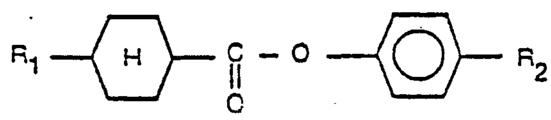

(Where $R_1$ is an alkyl group having 1-7 carbon atoms such as propyl group, butyl group or pentyl group; and $R_2$ is an alkoxy group having 1-7 carbon atoms such as methoxy group, ethoxy group, propoxy group, butoxy group, pentoxy group or hexyloxy group or an alkyl group such as a pentyl group or a hexyl group). Specific examples of such liquid crystals include the following:

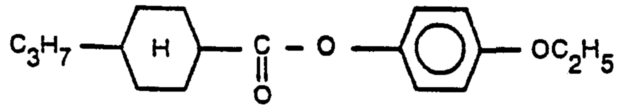

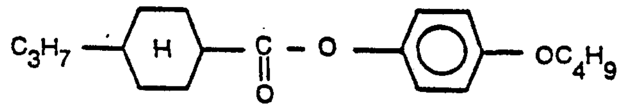

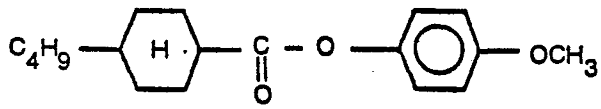

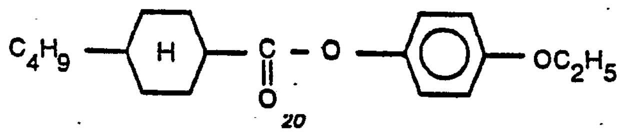

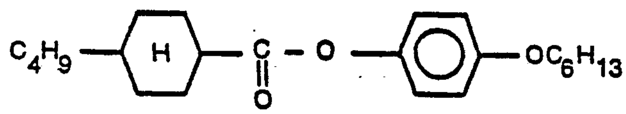

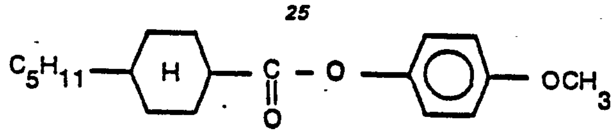

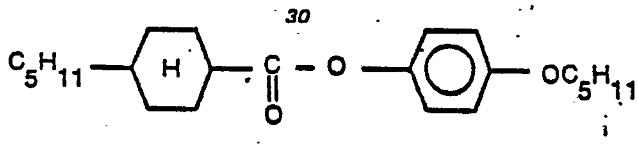

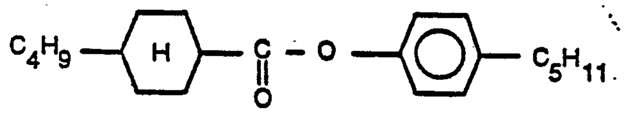

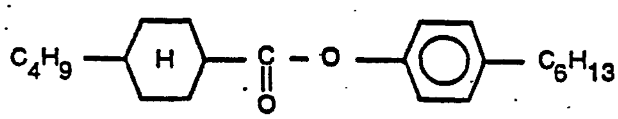

Mixtures of these cyclohexanecarboxylic acid ester type liquid crystals may also be used, an exempe of these being:

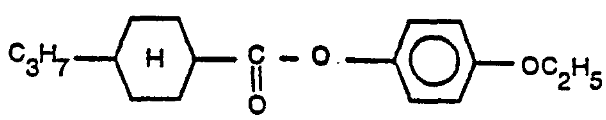

25% by weight

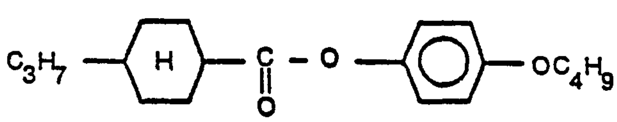

25% by weight

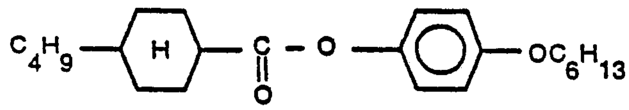
25% by weight

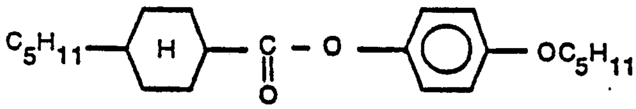
25% by weight

This mixed liquid crystal has a nematic transition point of 73° C and a birefringence Δ n of 0.095.

Phenylcyclohexane type liquid crystals, particularly of the general formula:

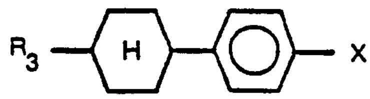

(where $R_3$ is an alkyl group having 1 -7 carbon atoms such as ethyl group, propyl group or butyl group; and X is an alkoxy group,

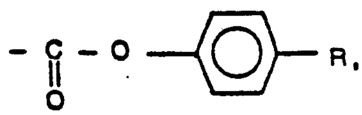

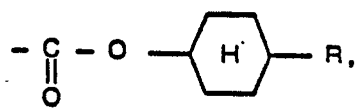

R being an alkyl group or an acyloxy group). Such liquid crystals include the following:

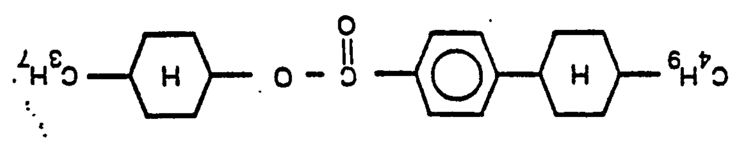

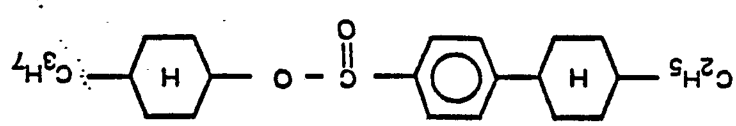

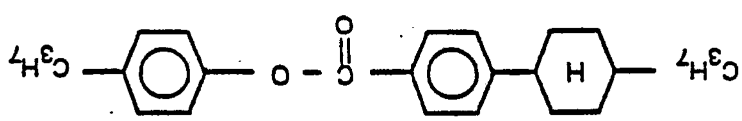

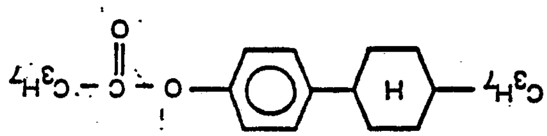

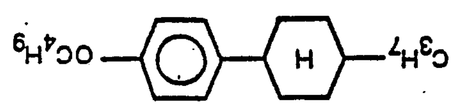

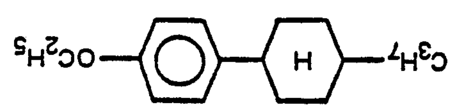

Mixtures of these may also be used, and an example of such mixtures includes:

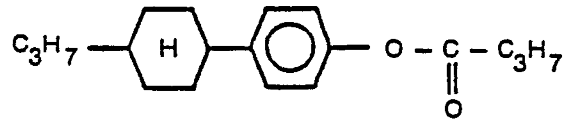

54% by weight

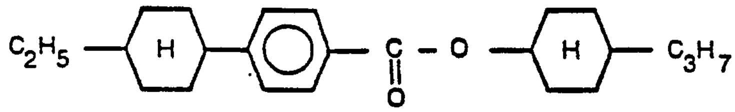

20% by weight

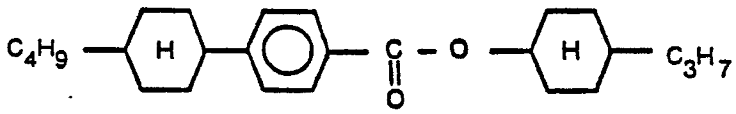

26% by weight

This mixed liquid crystal has a nematic transition point of 80°C and a birefringence $\Delta n$ of 0.10.

Phenyl benzoate type liquid crystals, particularly of the general formula:

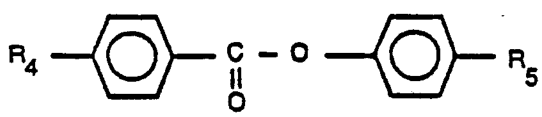

(wherein $R_4$ is an alkoxy group having 1-7 carbon atoms such as methoxy group or hexyloxy group, or an acyloxy group such as pentyloyloxy group; and $R_5$ is an alkyl group having 1-7 carbon atoms such as pentyl group). Such liquid crystals include the following:

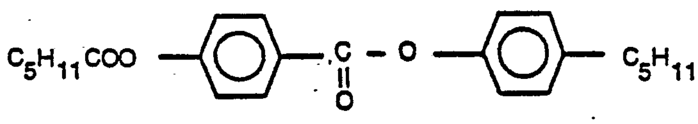

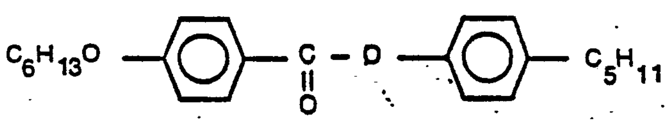

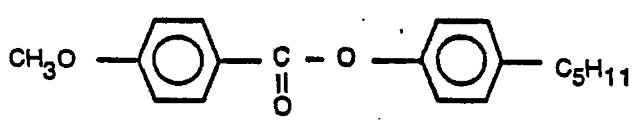

Mixtures of these liquid crystals may also be used. For example, an eutectic mixture of the above two latter liquid crystals may be used, this mixture having a nematic transition point of 48°C and a birefringence $\Delta n$ of 0.14.

Biphenylcyclohexane type liquid crystals, particularly of the general formula:

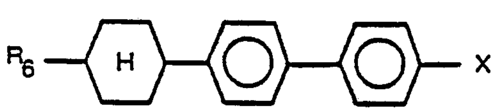

(wherein $R_6$ is an alkyl group having 1-7 carbon atoms and X is an alkyl group). Such liquid crystal include:

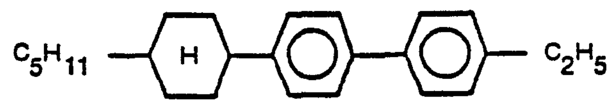

This liquid crystal has a birefringence $\Delta n$ of up to 0.12.

Cyclohexylcyclohexane type liquid crystals which have birefringence of up to 0.05.

When the liquid crystal materials mentioned above are used as the first component in mixed forms, liquid crystals of the same type or of different types may be mixed together. The first component of the liquid crystal material of the present invention has a birefringence of up to about 0.14.

The liquid crystals having relatively great birefringence comprising the second component of the liquid crystal material of the present invention include:

Azoxy type liquid crystals such as:

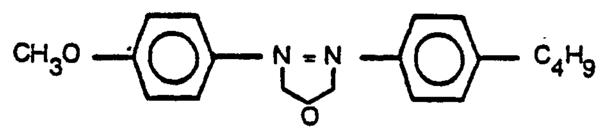

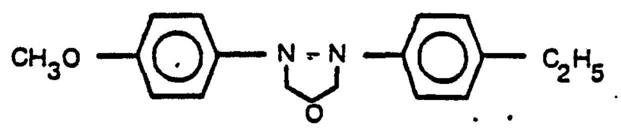

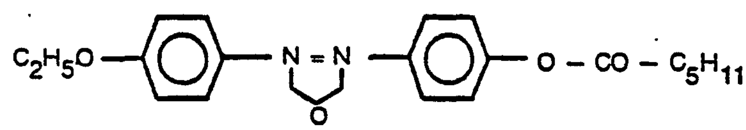

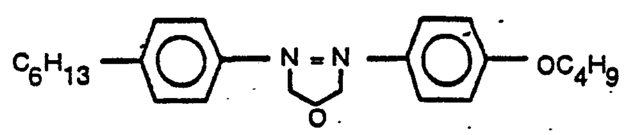

Mixtures of these liquid crystals may also be used. For example, an eutectic mixture of the above two former liquid crystals has a $\Delta n$ of 0.29 and a nematic transition point of 73° C.

Schiff base type liquid crystals such as:

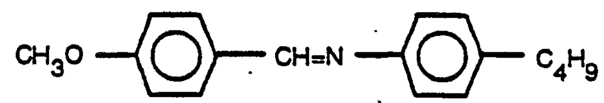

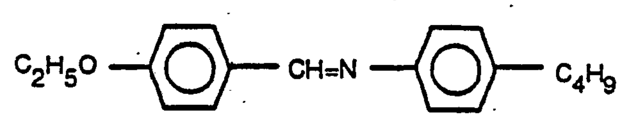

and mixtures thereof. An example of such a mixture is a mixture of the two types of liquid crystals described above in a weight ratio of 1:1. This mixture has a nematic transition point of 63° C and a birefringence $\Delta n$ of 0.255.

The liquid crystals having relatively great birefringence may further include

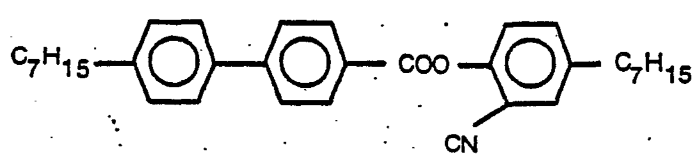

The second component has a birefringence Δn of 0.2 to 0.3.

The first and second components described above are mixed together to have a birefringence of 0.14 to 0.21 to provide the liquid crystal material of the present invention. The mixtures include a mixture of a cyclohexylcarboxylic acid ester type liquid crystal and a Schiff base type liquid crystal; a mixture of a cyclohexylcarboxylic acid ester type liquid crystal and an azoxy type liquid crystal; a mixture of a phenylcyclohexane type liquid crystal and a benzoate ester type liquid crystal; a mixture of a phenylcyclohexane type liquid crystal, a benzoate ester type liquid crystal and a Schiff base type liquid crystal; a mixture of cyclohexylcarboxylic acid ester type liquid crystal, a benzoate ester type liquid crystal, and a Schiff base type liquid crystal; and a mixture of a phenylcyclohexane type liquid crystal, a biphenylcyclohexane liquid crystal, a benzoate ester type liquid crystal, and a Schiff base type liquid crystal.

Any suitable agent for increasing electrical conductivity such as tetrabutylammonium bromide may be added to the mixed liquid crystal material of the present invention described above. These agents for increasing electrical conductivity are used in an amount sufficient to cause dynamic scattering in the liquid crystal. However, in order to improve the response characteristic and the stability (life) in DC drive, it has been found that it is preferable to use a charge-transfer complex having an acceptor selected from the group consisting of tetracyanoquinodimethane, tetracyanoethylene, and/or 2,3-dichloro-5,6-dicyanoquinone, and a donor consisting of di-n-butylferrocene (molar ratio, 1:1). Such a charge-transfer complex is used in an amount of 0.1 to 5% by weight based on the weight of the mixed liquid crystal material according to the present invention.

The mixed liquid crystal material described above together with the agent for increasing electrical conductivity are filled and sealed according to the conventional method in a space formed by a spacer made of e.g., Mylar®, between a pair of opposed electrodes, at least one of the electrodes being transparent, for example, glass base plates prepared by coating indium oxide, tin oxide or the like thereon to provide a display element.

The changes in the transmittance due to the light scattering upon application of a voltage (AC, 32 Hz) for display elements obtained in this manner were measured, and the results are shown in the appended Figure. In this figure, curve a shows a case wherein a liquid crystal material having a birefringence of 0.28 is used (Comparative Example 1), curve b shows a case wherein a mixed liquid crystal having a birefringence of 0.17 is used (present invention), and curve c shows a case wherein a liquid crystal material having a birefringence of 0.10 is used (Comparative Example 2).

As may be seen from the figure, the transmittance sharply changes upon application of a voltage above a threshold voltage in the case of the disply element (Comparative Example 1) using the liquid crystal material having a birefringence of 0.28. The transmittance rather gradually decreases upon application of a voltage exceeding the threshold voltage in the case of the display element (Comparative Example 2) using the liquid crystal material having a birefringence of 0.10. The transmittance slowly changes and finally shows a considerable decrease upon application of a voltage exceeding the threshold voltage in the case of the display element (present invention) using the liquid crystal material having a birefringence of 0.17.

Thus, in the case of Comparative Example 1, the decrease in the transmittence upon application of a voltage is great and excellent contrast may be obtained. However, the voltage-transmittance curve is sharp, and the intermediate mode (gray scale) is hard to obtain. In contrast with this, in the case of Comparative Example 2, the intermediate mode is relatively easy to obtain but the contrast is inferior. In comparison with these Comparative examples, in the case of the example of the present invention (curve b), the contrast is excellent and the intermediate mode is easy to obtain as well. The results were the same when liquid crystals having birefringence of 0.14 to 0.21 were used. When the birefringence of the liquid crystal material used is below 0.14, the contrast is low and the angle of the field is small. When the birefringenge exceeds 0.21, the contrast is great. However, the desired intermediate mode is not obtained.

The present invention will now be described with reference to its examples.

## Exemple 1

A mixed liquid crystal was prepared which consisted of 2 parts by weight of p-methoxybenzylidene-p-n-butylaniline and 1 part by weight of 4-butyl-4'-hexyloxytranscyclohexane-carboxylic acid phenyl ester. This mixed liquid crystal had a birefringence of 0.17 when measured with light of 589 nm wavelength at 20°C.

As an agent for increasing electrical conductivity, tetrabutylammonium bromide was added in an amount of 0.01% by weight to the mixed liquid crystal to provide the liquid crystal material. This liquid crystal material was sealed between two glass base plates, each having an indium oxide film electrode, to provide a liquid crystal display element.

AC voltages were applied to the display element thus obtained, and the display performance was examined. Scattering phenomenon was observed from an applied voltage of about 7.8V, and the transmittance slowly decreased until the applied voltage reached 30 V (transmittance 30%). When the display element was tested in a display panel having 60 x 60 picture elements, intermediate modes (gray shades) in 6 stages were displayed with excellent contrast, and clear images were obtained.

**Example 2**

As a liquid crystal having small birefringence, a cyclohexanecarboxylic acid ester type mixed liquid crystal was prepared by mixing 3 parts by weight of 4-trans-propylcyclohexanecarboxylic acid-4'-ethoxyphenyl ester, 3 parts by weight of 4-trans-pentylcyclohexanecarboxylic acid-4'-pentoxyphenyl ester, and 4 parts by weight of 4-trans-butylcyclohexanecarboxylic acid-4'-hexylphenyl ester. This mixed liquid crystal had a birefringence of 0.10 when measured with light of 589 nm wavelength at 20° C, and a nematic liquid crystal temperature range of -10 to 57° C.

This cyclohexanecarboxylic acid ester type mixed liquid crystal having a small birefringence was mixed in an amount of 3 parts by weight with 2 parts by weight of 4-methoxybenzylidene-4'-butyl-aniline (0.23 birefringence) which is a Schiff base type liquid crystal as a liquid crystal having a great birefringenca to prepare mixed liquid crystal, composed of a liquid crystal having a small birefringence and a liquid crystal having a great birefringence. This mixed liquid crystal had a birefringence of 0.15 when measured with light of 589 nm wavelength at 20°C, and a nematic liquid crystal temperature range of -5 to 53°C. As an agent for increasing electrical conductivity, a charge-transfer complex consisting of an equimolar mixture of 7,7,8,8-tetracyanoquinodimethane and di-n-butylferrocene was added in an amount of 1% by weight to this mixed liquid crystal to provide a liquid crystal material for dynamic scattering (DS).

This DS liquid crystal material was sealed between two glass base plates, each having an indium oxide film electrode, to prepare a liquid crystal display element. The electrical conductivity of this liquid crystal display element was 1.0 x $10^{-9}$ $(\Omega\ cm)^{-1}$. The display performance of the liquid element display element thus obtained was examined. Scattering phenomenon was observed from 6.5 V, and the transmittance gradually decreasad as the applied voltage increased, reaching 35% at 30V applied voltage, when an AC voltage (sinusoidal wave) was applied. When a DC voltage was applied, the scattering phenomenon was similarly observed from 5.8 V, and the transmittance gradually decreased as the applied voltage increased, reaching 30% at 30 V applied voltage. The transmittance gradually decreased with the increase in the applied voltage because the birefringence of the mixed liquid crystal was within a suitable range, implying that the intermediate mode may be easily attained. In fact, this liquid crystal material was sealed in a picture image display panel of 60 x 60 picture elements to evaluate the picture image display performance. Intermediate modes in 10 stages were obtained with excellent contrast, and clear images were obtained.

The response of this liquid crystal element was evaluated. When the applied voltage was 20 V, the rising time was 15 msec and the falling time was 9 msec (cell thickness, 8µm). In comparison with a conventional liquid crystal display element of the type utilizing dynamic scattering effect, the response time was as good as 1/5 to 1/10. For evaluating the life, a DC voltage of 15 V was applied to this liquid crystal element and the element was placed in a thermostat at 45°C. The variations in the current and the outer appearance were examined. After 3,000 hours of continuous electrical operation, only slight degradation was observed at the electrode edges. Significant changes in the current value were not observed, although sufficient dynamic scattering was caused. Judging from the performance at 45°C, the liquid crystal display element of this example is assumed to have a DC operation life of over 2 years at normal temperatures.

**Example 3**

As a liquid crystal having small birefringence, a mixed liquid crystal was prepared by mixing 5 parts by weight of phenylcyclohexane type trans-4-propyl-(4-butoxyphenyl)-cyclohexane, 6 parts by weight of biphenylcyclohexane type trans-4-pentyl-(4'-ethylbiphenyl)-cyclohexane, and 6 parts by weight of benzoate ester type 4-pentylphenyl-4-methoxy benzoate. As a liquid crystal having great birefringence, a mixed liquid crystal was prepared by mixing 2.7 parts by weight of 2-cyano-4-heptyl-phenyl-4'-pentyl-4-biphenylcarboxylate and 2 parts by weight of 4-methoxybenzylidene - 4'-butylaniline. The liquid crystals having a small birefringence and a great birefringence, respectively, were mixed in a weight ratio of 76.5 to 23.5. The birefringence of the mixed liquid crystal thus obtained was 0.16 with light of 589 nm wavelength at 20° C. The nematic liquid crystal temperature range was -12 to 71 °C. To this mixed liquid crystal was added 1% by weight of an agent for increasing electrical conductivity to provide a liquid crystal material for dynamic scattering, the agent being a charge-transfer complex prepared by mixing in an equimolar ratio 77,7,8,8-tetracyanoquinodimethane and di-n-butylferrocene. This DS liquid crystal material was sealed between two glass base plates, each having an indium oxide film electrode, to constitute a liquid crystal display element. The electrical conductivity of this liquid crystal display element was 1.2 x $10^{-9}$ $(\Omega\ cm)^{-1}$. The display performance of this liquid crystal display element was examined. When the AV voltage (sinusoidal wave) was applied, the scattering phenomenon was observed from 7.2 V. The transmittance gradually decreased when the applied voltage was increased, reaching 35% at 30 V applied voltage. When a DC voltage was applied, the scattering phenomenon was observed at 6.0 V and above. With the DC voltage, the transmittance gradually decreased with the increase in the applied voltage, reaching 30% at an applied voltage of 30 V. The transmittance gradually changed with the increase in the applied voltage because the birefringence of the mixed liquid crystal was within a suitable range, implying that the intermediate mode may be easily attained. In fact, this liquid crystal material was sealed in a picture image display panel of 60 x 60 picture elements to evaluate the picture image display performance.

Intermediate modes in 1 0 stages were obtained with excellent contrast, and the clear images were obtained.

The response was evaluated for this liquid crystal display element. When the applied voltage was 20 V, the rising time was 18 msec and the falling time was 26 msec (cell thickness, 8 μm). The response time was 1/5 to 1/8 that of a conventional liquid crystal display element of the type utilizing dynamic scattering effect. For evaluating the life, a 15 V DC voltage was applied to this liquid crystal display element, and the element was placed in a thermostat at 60°C. The variations in the current value and the outer appearance were observed. After 3,000 hours of continuous electrical operation, only slight degradation was observed at the electrode edges, and no extreme changes in the current value were observed. Sufficient dynamic scattering was observed. Furthermore, considering the performance at 60°C, the liquid crystal display element of this example is assumed to have a DC operation life of over 3 years at normal temperatures.

As an agent for increasing electrical conductivity, charge-transfer complexes were prepared by mixing 2,3 - dichloro - 5,6 - dicyanobenzoquinone and di-n-butylferrocene or by mixing tetracyanoethylene and di-n-butylferrocene. These charge-transfer complexes were individually mixed into the mixed liquid crystal described above to provide liquid crystal display elements, and similar results were obtained.

**Example 4**

As a liquid crystal having small birefringence, a mixture was prepared which consisted of a mixture of equal weights of three cyclohexanecarboxylic acid ester type liquid crystals, i.e., 4-trans-alkylcyclohexanecarboxylic acid-4'-alkoxyphenyl esters wherein the alkyl group is propyl group, butyl group and pentyl group, and the alkoxy group is methoxy group, ethoxy group and propoxy group, respectively; and a mixture of equal weights of 4 - hexanoyloxy - (4'-propylphenyl)benzoate and 4-hexanoyloxy - (4' - pentylphenyl)benzoate. The mixing ratio of the cyclohexanecarboxylic ester type liquid crystal with the phenylbenzoate type liquid crystal was 4 to 1 based on the weight. As a liquid crystal having great birefringence, a mixture of equal weights of Schiff base type 4 - methoxybenzylidene - 4' - butylaniline and 4-ethoxybenzylidene-4'-butylaniline was used. The liquid crystals having small birefringence and great birefringence, respectively, were mixed in a weight ratio of 1 to 1. The birefringence of this mixed liquid crystal was 0.17 when measured with light of 589 nm wavelength at 20°C. The nematic liquid crystal temperature range was -15 to 67°C. As an agent for increasing electrical conductivity, 1 % by weight of a charge-transfer complex, an equimolar mixture of 2,3-dichloro-5,6-dicyanoquinone and di-n-butylferrocene was added to this mixed liquid crystal to prepare a liquid crystal material for dynamic scattering. This liquid crystal material for dynamic scattering was sealed between two glass base plates, each having an indium oxide film electrode, and a liquid crystal display element was thus obtained. The electrical conductivity of this liquid crystal display element was $1.0 \times 10^{-9}$ $(\Omega\ cm)^{-1}$. The display performance of the liquid crystal display element thus obtained was examined. When an AC voltage (sinusoidal wave) was applied, the scattering phenomenon was observed at 7.2 V and above. The transmittance gradually decreased when the applied voltage was increaaed, reaching 35% at a 30 V applied voltage. With a DC voltage, the scattering phenomenon was observed similarly from 6.0 V. With the DC voltage, the transmittance gradually decreased with the increase in the applied voltage, reaching 30% at 30 V applied voltage. This gradual decrease of the transmittance with the increase in the applied voltage occurs because the birefringence of the mixed liquid crystal is within a suitable range, implying that the intermediate mode may be easily attained. In fact, this liquid crystal material was sealed in a picture image display panel having 60 x 60 picture elements and the picture image display performance was evaluated. Intermediate modes of 10 stages were obtained with excellent contrast, and the clear images were obtained.

Further, the response was evaluated with respect to this liquid crystal display element. The rising time was 15 msec and the falling time was 18 msec (cell thickness, 8 μm) at 20 V applied voltage. The response time was as good as 1/5 to 1/10 that of a conventional liquid crystal display element of the type utilizing the dynamic scattering effect. For evaluating the life, a 15 V DC voltage was applied to this liquid crystal display element, and the element was placed in a thermostat at 45°C. The variations in the current value and the outer appearance were examined. After 3,000 hours of continuous electrical operation, only slight degradation was observed at the electrode edges. No extreme changes were noted in the current value, and sufficient dynamic scattering was observed. Considering the performance at 45°C, the liquid crystal display element of this example is assumed to have a DC operation life of over 2 years at normal temperatures.

**Example 5**

The mixed liquid crystal having small birefringence in Example 2 and a mixed liquid crystal having great birefringence, an eutectic azoxy type mixture of 4-methoxy-4'-butylazoxybenzene and 4-methoxy-4'-ethylazoxybenzene, were mixed to prepare a mixed liquid crystal. The mixing ratio of the liquid crystals respectively having small birefringence and great birefringence was 3 to 2 based on the weight, This mixed liquid crystal had a birefringence of 0.19 when measured with light of 589 nm wavelength at 20°C. The nematic liquid crystal temperature range of this liquid crystal was -15 to so 67°C.

As an agent for increasing electrical conductivity, 0.1 % by weight of tetrabutylammonium bromide was added to this mixed liquid crystal to prepare a liquid crystal material for dynamic scattering. This liquid crystal material for dynamic scattering was sealed between two glass base plates, each having an indium oxide film electrode, to provide a liquid crystal display element. The electrical conductivity of this liquid crystal display element was $1.5 \times 10^{-9}$ $(\Omega\ cm)^{-1}$. The display performance of this liquid crystal display element was examined. With an AC voltage (sinusoidal wave), the scattering phenomenon was observed from 4.0 V. The transmittance gradually decreased when the applied voltage was increased, reaching 25% at a 30 V applied voltage. This gradual decrease in the transmittance with the increase in the applied voltage occurs because the birefringence of the mixed liquid crystal is within a suitable range, implying that the intermediate mode may be easily attained. In fact, this liquid crystal material was sealed in a picture image display panel of 60 x 60 picture elements to evaluate the picture image display performance. Intermediate modes of 10 stages were obtained with excellent contrast, and the clear images were obtained.

Further, the response was evaluated for this liquid crystal display element. With a 20 V applied voltage, the rising time was 10 msec and the falling time was 10 msec (cell thickness, 8 μm). The response time was as good as 1/5 to 1/10 that of a conventional liquid crystal display element of the type utilizing dynamic scattering effect.

**Example 6**

Three parts by weight of a phenylcyclohexane type mixed liquid crystal consisting of 54% by weight of butyric acid - 4 - trans - (4 - propyl)cyclohexyl - phenyl ester, 20% by weight of 4-trans - (4 - ethyl)cyclohexyl - benzoic acid - trans - 4 - propylcyclohexyl ester and 26% by weight of 4 - trans - (4 - butyl)cyclohexyl - benzoic acid - trans - 4-propylcyclohexyl ester as a liquid crystal having small birefringence were mixed with 2 parts by weight of an azoxy type 4 - methoxy-4 - butylazoxybenzene as a liquid crystal having great birefringence to provide a mixed liquid crystal. This mixed liquid crystal had a birefringence of 0.17 when measured with light of 589 nm wavelength at 20° C and a nematic liquid crystal temperature range of -10 to 78° C.

Tetrahexylammonium bromide was added to this liquid crystal in the amount of 0.1% by weight as an agent for increasing electrical conductivity to provide a liquid crystal material for dynamic scattering. This liquid crystal material for dynamic scattering was sealed between two glass base plates, each having an indium oxide film electrode, to provide a liquid crystal display element. The electrical conductivity of this liquid crystal display element was $1.2 \times 10^{-9}$ $(\Omega\ cm)^{-1}$. The display performance of this liquid crystal display element was examined. Scattering phenomenon was observed at 4.5 V and above with an AC voltage (sinusoidal wave). The transmittance gradually decreased when the applied voltage was increased, reaching 28% at a 30 V applied voltage. The gradual decrease in the transmittance with the increase in the applied voltage occurs because the birefringence of the mixed liquid crystal is within a suitable range. This implies that the intermediate mode may be easily attained. In fact, the liquid crystal material was sealed in a picture image display panel of 60 x 60 picture elements to evaluate the picture image display performance. Intermediate modes of 10 stages were obtained with excellent contrast, and the clear images were obtained.

The response of this liquid crystal display element was evaluated. At a 20 V applied voltage, the rising time was 10 msec and the falling time was 10 msec (cell thickness, 8 μm). The response time was as good as 1/5 to 1/10 that of a conventional liquid crystal display element of the type utilizing dynamic scattering effect.

**Claim**

1. A liquid crystal display element utilizing dynamic scattering effect comprising:

a pair of electrode base plates defining a space therebetween, at least one of which is transparent; and a liquid crystal material filled in said space having a birefringence of 0,14 to 0.21 and consisting of a mixture of a first component comprising at least one liquid crystal having relatively small birefringence of up to 0,14 and a second component comprising at least one liquid crystal having relatively great birefringence of 0,2 to 0,3, with the exception of a liquid crystal material consisting of compounds of the following formulae:

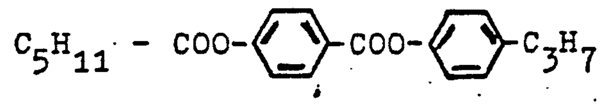

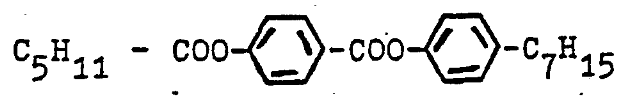

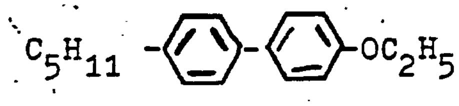

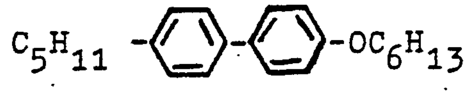

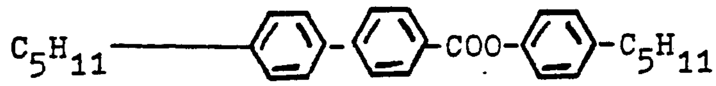

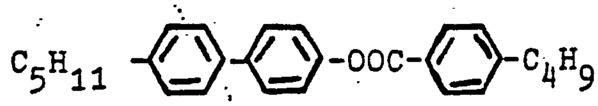

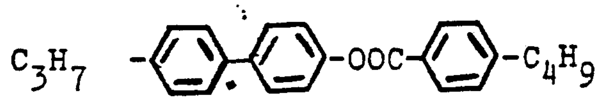

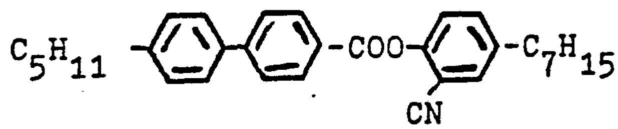

2. An element according to claim 1, wherein an agent for increasing electrical conductivity is added to the liquid crystal material.

3. An element according to claim 2, wherein the agent for increasing electrical conductivity is a charge-transfer complex having, as an acceptor, tetracyanoquinodimethane, tetracyanoethylene, 2,3-dichloro-5,6-dicyanoquinone, or a mixture thereof; and having, as a donor, di-n-butylferrocene.

4. An element according to claim 3, wherein the complex is present in an amount of 0.1 to 5% by weight based on the liquid crystal.

5. An element according to claim 1, wherein the first component is selected from the group consisting of cyclohexanecarboxylic acid ester type liquid crystals, phenylcyclohexane type liquid crystals, phenyl benzoate type liquid crystals, biphenylcyclohexane type liquid crystals, and cyclohexylcyclohexane type liquid crystals.

6. An element according to claim 1 or 5, wherein the second component is selected from the group consisting of azoxy type liquid crystals and Schiff base type liquid crystals.

7. An element according to claim 1, wherein the liquid crystal material is a mixture of p-methoxybenzylidene-p-n-butylaniline and 4-transbutylcyclohexanecarboxylic acid-4'-hexyloxyphenyl ester; a mixture of 4-trans-propylcyclohexanecarboxylic acid-4'-ethoxyphenyl ester, 4-trans-pentyl-cyclohexanecarboxylic acid-4'-pentoxyphenyl ester, 4-transbutylcyclohexanecarboxylic acid-4'-hexyl-phenyl ester and 4-methoxybenzylidene-4'-butylaniline; a mixture of trans-4-propyl-(4-butoxy-phenyl)-cyclohexane, trans-4-pentyl-(4'-ethylbiphenyl)-cyclohexane, 4-pentylphenyl-4-methoxybenzoate, 2-cyano-4-heptylphenyl-4'-pentyl-4-biphenylcarboxylate and 4-methoxybenzylidene - 4' - butylaniline; a mixture of 4-trans-alkylcyclohexanecarboxylic acid-4'-alkoxyphenyl esters, 4-hexanoyloxy-(4'-propylphenyl)benzoate, 4-hexanouloxy-(4'-pentylphenyl)-benzoate, 4-methoxybenzylidene-4'-butylaniline and 4-ethoxybenzylidene-4'-butylaniline; a mixture of 4-trans-propylcyclohexanecarboxylic acid-4'-ethoxyphenyl ester, 4-trans-pentylcyclohexanecarboxylic acid-4'-pentyloxyphenyl ester, 4-trans-butylcyclohexanecarboxylic acid-4'-hexylphenyl ester, 4-methoxy-4'-ethylazoxybenzene and 4-methoxy-4'-butylazoxybenzene; or a mixture of butyric acid-4 - trans - (4 - propyl)cyclohexyl - phenyl ester, 4 - trans - (4-ethyl)cyclohexyl - benzoic acid-trans - 4 - propylcyclohexyl ester, 4 - trans - (4 - butyl)cyclohexylbenzoic acid - trans - 4 - propylcyclohexyl ester and 4 - methoxy - 4' - butylazoxybenzene.

**Revendications**

1 - Un dispositif d'affichage à cristal liquide utilisant l'effet de dispersion dynamique comprenant: une paire de plaques de base formant électrode délimitant entre elles un espace dont au moins une est transparente; et un cristal liquide remplissant ledit espace et ayant une biréfringence de 0,14 à 0,21 et constitué d'un mélange d'un premier composant comprenant au moins un cristal liquide ayant une biréfringence relativement faible d'au plus 0,14 et d'un second composant comprenant au moins un cristal liquide ayant une biréfringence relativement élevée de 0,2 à 0,3, a l'exception d'un cristal liquide comprenant des composés de formules suivantes:

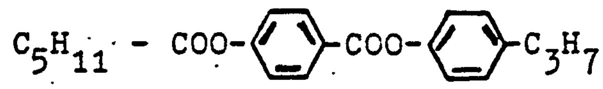

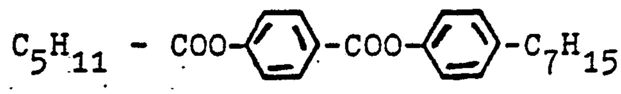

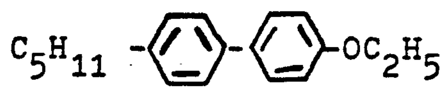

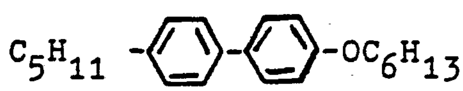

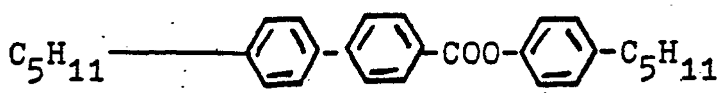

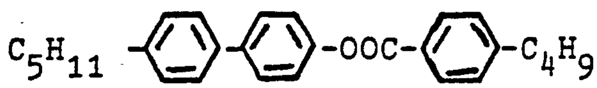

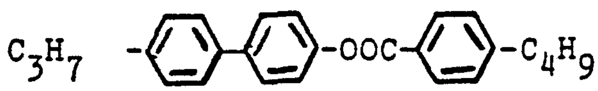

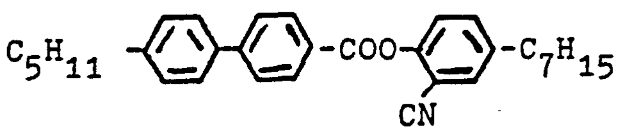

2. Un dispositif selon la revendication 1, dans lequel un agent d'accroissement de la conductivité électrique est ajouté au cristal liquide.

3. Un dispositif selon la revendication 2, dans lequel l'agent accroissant la conductivité électrique est un complexe de transfert de chage ayant comme accepteur du tétracyanoquinodiméthane, du tétracyanoéthylène de la 2,3-dichloro-5,6-dicyanoquinone ou un de leurs mélanges; et ayant comme donneur du di-n-butylferrocène.

4. Un dispositif selon la revendication 3, dans lequel le complexe est présent à raison de 0,1 à 5% en poids par rapport au cristal liquide.

5. Un dispositif selon la revendication 1, dans lequel le premier composant est choisi parmi le groupe constitué par les cristaux liquides de type ester d'acide cyclohexanecarboxylique, les cristaux liquides de type phénylcyclohexane, les cristaux liquides de type benzoate de phényle, les cristaux liquides de type biphénylcyclohexane et les cristaux liquides de type cyclohexylcyclohexane.

6. Un dispositif selon l'une des revendications 1 ou 5, dans lequel le second composant est choisi parmi le groupe constitué par les cristaux liquides de type azoxy et les cristaux liquides de type base de Schiff.

7. Un dispositif selon la revendication 1, dans lequel le cristal liquide est un mélange de p-méthoxybenzylidène-p-n-butylaniline est de 4-trans-butylcyclohexanecarboxylate de 4'-hexyloxy-phényle; un mélange de 4-trans-propylcyclohexanecarboxylate de 4-éthoxyphényle, de 4-trans-pentylcyclohexanecarboxylate de 4'-pentoxyphényle, de 4-trans-butylcyclohexanecarboxylate de 4'-hexylphényle et de 4-méthoxybenzylidène-4-butylaniline; un mélange de trans - 4 - propyl - (4-butoxyphényl) - cyclohexane, de trans - 4 - pentyl - (4'-éthylbiphényl)-cyclohexane, de 4-méthoxybenzoate de 4-pentylphényle, de 4'-pentyl-4-biphénylcarboxylate de 2-cyano-4-heptyl-phényle et de 4-méthoxybenzylidène-4'-butylaniline; un mélange de 4-trans-alkylcyclohexane-carboxylates de 4'-alcoxyphényle, de 4-hexanoyloxy-benzoate de 4'-propylphényle, de 4-hexanoyloxy-benzoate de 4'-pentylphényle, de 4-méthoxybenzylidène-4'-butylaniline et de 4 - éthoxybenzylidène-4'-butylaniline; un mélange de 4-trans-propylcyclohexanecarboxylate de 4'-éthoxyphényle, de 4-trans-pentylcyclohexanecarboxylate de 4'-pentyloxyphényle, de 4-trans-butylcyclohexanecarboxylate de 4'-hexylphèyle, de 4-méthoxy-4'-heptylazoxybenzène et de 4-méthoxy-4'-butylazoxybenzène; ou un mélange de butyrate de 4-trans-(4-propyl)cyclohexylphényle, de 4-trans-(4-éthyl)cyclohexyl-benzoate de trans-4-propylcyclohexyle, de 4-trans-(4-butyl)cyclohexyl-benzoate de trans-4-propylcyclohexyle at de 4-méthoxy-4'-butylazoxybenzène.

**Patentansprüche**

1. Flüssigkristall-Anzeigevorrichtung, die sich eines dynamischen Streueffekts bedient, gekennzeichnet durch ein Paar Elektrodengrundplatten, die zwischen sich einen Raum festlegen und von denen mindestens eine durchsichtig ist, und ein den Raum füllendes Flüssigkristallmaterial einer Doppelbrechung von 0,14 - 0,21, das aus einem Gemisch einer ersten Komponente in Form mindestens eines Flüssigkristalls einer relativ geringen Doppelbrechung bis zu 0,14 und einer zweiten Komponente in Form mindestens eines Flüssigkristalls einer relativ großen Doppelbrechung von 0,2 - 0,3 besteht, ausgenommen ein Flüssigkristallmaterial aus Verbindungen der allgemeinen Formeln:

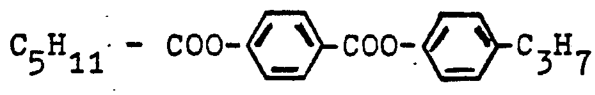

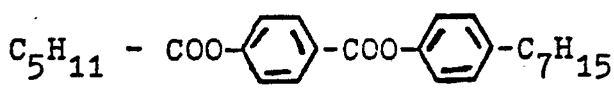

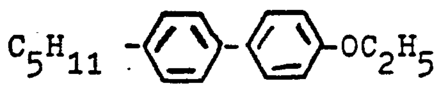

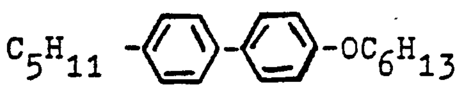

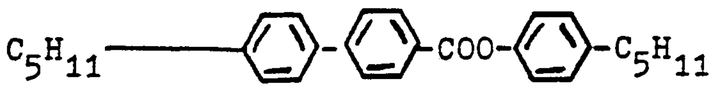

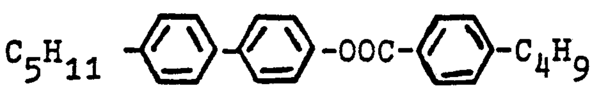

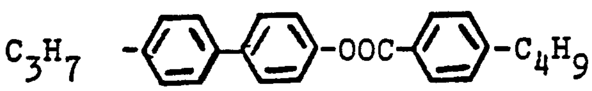

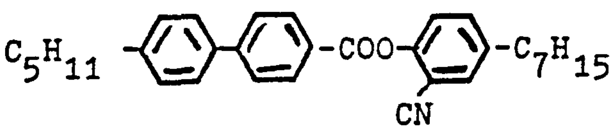

2. Vorrichtung nach Anspruch 1, dadurch gekennzeichnet, daß dem Flüssigkristallmaterial ein Mittel zur Erhöhung der elektrischen Leitfähigkeit zugesetzt ist.

3. Vorrichtung nach Anspruch 2, dadurch gekennzeichnet, daß das Mittel zur Erhöhung der elektrischen Leitfähigkeit aus einem Ladungsübertragungskomplex mit Tetracyanochinodimethan, Tetracyanoethylen, 2,3-Dichlor-5,6-dicyanochinon oder einem Gemisch derselben als Akzeptor und Di-n-butylferrocen als Donator besteht.

4. Vorrichtung nach Anspruch 3, dadurch gekennzeichnet, daß der Komplex in einer Menge von 0,1--5 Gew.-% bezogen auf den Flüssigkristall, vorhanden ist.

5. Vorrichtung nach Anspruch 1, dadurch gekennzeichnet, daß die erste Komponente aus einem Cyclohexencarbonsäureester-, Phenylcyclohexan-, Phenylbenzoat-, Biphenylcyclohexan- und/oder Cyclohexylcyclohexan-Flüssigkristall besteht.

6. Vorrichtung nach Ansprüchen 1 oder 5, dadurch gekennzeichnet, daß die zweite Komponente aus einem

Azoxy-Flüssigkristall und/oder einem Flüssigkristall in Form einer Schiff'schen Base besteht.

7. Vorrichtung nach Anspruch 1, dadurch gekennzeichnet, daß das Flüssigkristallmaterial aus einem Gemisch aus p-Methoxybenzyliden-p-n-butylanilin und 4-trans-Butylcyclohexancarbonsäure-4'-hexyloxyphenylester; 4-trans-Propylcyclohexancarbonsäu-re-4'-ethoxyphenylester, 4-trans-Pentyl-cyclohexancarbonsäure-4'-pentoxyphenylester, 4-trans-Butylcyclohexancarbonsäure-4' -hexylphenylester und 4-Methoxybenzyliden-4'-butylanilin; trans-4-Propyl-(4-butoxyphenyl)-cyclohexan. trans-4-Pentyl-(4'-ethylbiphenyl)-cyclohexan. 4-Pentylphenyl-4-methoxybenzoat, 2-Cyano-4-heptylphenyl-4'-pentyl-4-biphenylcarboxylat und 4-Methoxybenzyliden-4'-butylanilin; 4-trans-Alkylcyclohexancarbonsäure-4'-alkoxyphenylestern, 4-Hexanoyloxy-(4'-propylphenyl)-benzoat, 4-Hexanoyloxy-(4'-pentylphenyl)-benzoat, 4-Methoxybenzyliden-4'-butylanilin und 4-Ethoxybenzyliden-4'-butylanilin; 4-trans-Propylcyclohexancarbonsäu-re-4'-ethoxyphenylester, 4-trans-Pentylcyclohexan-carbonsäure-4'-pentyloxyphenylester, 4-trans-Butylcyclohexancarbonsäure-4'-hexylphenylester, 4-Methoxy-4'-ethylazoxybenzol und 4-Methoxy-4'-butylazoxybenzol oder Buttersäure-4-trans-(4-propyl)-cyclohexylphenylester, 4-trans-(4-Ethyl)-cyclohexylbenzoesäure-trans-4-propylcyclohexylester, 4-trans-(4-Butyl)-cyclohexylbenzoesäure-trans-4-propylcyclohexylester und -4-Methoxy-4'-butylazoxy-benzol besteht.

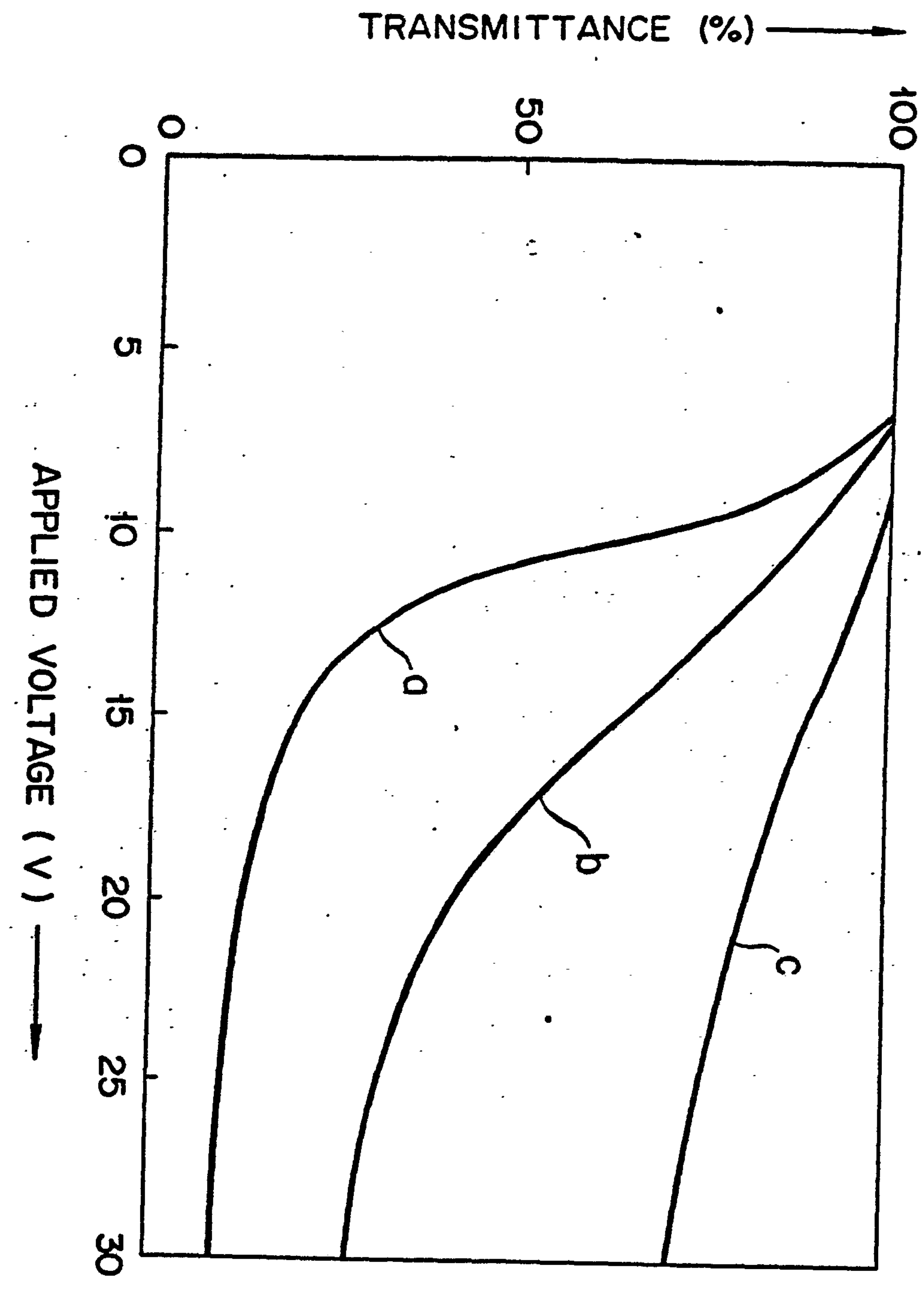

TRANSMITTANCE (%)
0
50
100
APPLIED VOLTAGE ( V )
0
5
10
15
20
25
30
a
b
c